Europäisches Patentamt

European Patent Office

Office européen des brevets

(19)

(11) Numéro de publication: **0 226 482**
**A1**

## (12) DEMANDE DE BREVET EUROPEEN

(21) Numéro de dépôt: **86402275.1**

(22) Date de dépôt: **13.10.86**

(51) Int. Cl.⁴: **G 02 B 6/38**

(30) Priorité: **29.10.85 FR 8516022**

(43) Date de publication de la demande:
**24.06.87 Bulletin 87/26**

(84) Etats contractants désignés:
**BE CH DE GB IT LI NL SE**

(71) Demandeur: **SOCIETE ANONYME DE
TELECOMMUNICATIONS (S.A.T.)
40 avenue de New York
F-75116 Paris (FR)**

**SOCIETE INDUSTRIELLE DE LIAISONS ELECTRIQUES
(SILEC)
64 bis, rue de Monceau
F-75008 Paris (FR)**

(72) Inventeur: **Calevo, Robert
41 rue Cantagrel
F-75631 Paris Cedex 13 (FR)**

**Michaux, Jean-Pierre
41 rue Cantagrel
F-75631 Paris Cedex 13 (FR)**

(74) Mandataire: **Cerez-Busnel, Béatrice
Société Anonyme de Télécommunications 41, rue
Cantagrel
F-75631 Paris Cedex 13 (FR)**

(54) **Dispositif de raccordement de fibres optiques.**

(57) La présente invention se rapporte aux dispositifs de raccordement des extrêmités de fibres optiques sur une embase pourvue d'au moins une rainure susceptible de recevoir les extrêmités des fibres.

Le dispositif de l'invention comporte essentiellement un guide 3 sensiblement tubulaire rigide surmonté d'une rainure au moins, à parois externes abruptes, ledit guide 3 étant entouré d'au moins un conduit presseur 4 souple enfermant les extrêmités de fibres 1 et 2 dans la rainure 30 disposée longitudinalement sur la périphérie dudit guide 3.

Multiples applications, par exemple : manipulations en chantier, ou autres.

FIG. 4.

## Description

Dispositif de raccordement de fibres optiques

La présente invention concerne les dispositifs de raccordement des extrêmités de deux fibres optiques comprenant une embase (ou un support) ayant une rainure centrale susceptible de recevoir les extrêmités des fibres et des moyens de pressage des fibres dans les rainures.

Les dispositifs connus de raccordement de deux fibres, ou de deux ensembles de fibres optiques deux à deux, nécessitent un démontage des différentes pièces composant un boîtier pour introduire ou retirer les fibres optiques. Les moyens de pressage sont souvent constitués par le couvercle du boîtier ou par des pièces encastrées entre le couvercle du boîtier et l'embase du boîtier qui sont fixées solidement au boîtier. Les opérations de démontage et de montage du boîtier sont longues et fastidieuses.

En outre, ces dispositifs connus sont encombrants et peu adaptés aux multiples applications envisagées.

Le brevet français n° 2 538 919 de la demanderesse procurait déjà de grandes améliorations de montage.

Le brevet européen 0 122 169 décrit également un dispositif de raccordement pour fibres optiques qui comprend essentiellement un support en matériau mou, déformable élastiquement. Sa surface supérieure comporte une rainure droite propre à recevoir face à face les extrêmités respectives de deux fibres optiques à raccorder. Le support est logé dans une embase dont les montants reviennent en partie supérieure pour former des griffes qui maintiennent en appui sur la surface du support une plaque rigide. Selon une autre variante, le support est cylindrique et mou tandis que la plaque d'appui rigide est également cylindrique et est enfilée autour du support. Un tel dispositif procure certes un avantage au manipulateur car le cylindre extérieur est transparent mais il présente de très nombreux inconvénients. En effet, dans un tel dispositif le support est déformable et élastique, il est extrêmement difficile de réaliser une rainure à références précises dans un support souple. Ceci rend impossible un bon positionnement des extrêmités de fibres en vis-à-vis.

En outre, dans cette antériorité, l'élement presseur est rigide et commun pour les deux extrêmités ce qui rend impossible tout dépoussiérage et collage des extrêmités de fibres. En outre, un élément mou ne peut raisonnablement servir de support à des extrêmités de fibres et il est nécessaire de le transporter sur une autre embase rigide. Ceci augmente le nombre de manipulations sur le site, rend coûteux, moins fiable et plus détériorable le dispositif de raccordement.

La présente invention vise essentiellement à réaliser un dispositif de raccordement simple et rapide à mettre en oeuvre, et susceptible de procurer un très bon maintien des fibres.

Selon une première caractéristique, le dispositif de raccordement d'extrêmités de fibres optiques deux à deux, comprend une embase 3 (resp 8) comportant une rainure 30 (resp. 80) de réception des extrêmités de fibres (1, 2) pour aligner et abouter les extrêmités 10 et 20 de ces fibres (1, 2), un moyen presseur 4 (resp. 9) au moins permettant de maintenir lesdites extrêmités (10 et 20) dans ladite rainure 30 (resp. 80), ladite embase 3 étant un guide 3 (resp. 8) de structure sensiblement tubulaire, ladite rainure 30 étant disposée sur la périphérie de ce guide 3 et coaxialement à ce guide 3 (resp. 8). Le dispositif de l'invention est choisi en particulier tel que le guide 3 (resp. 8) est un support rigide de telle sorte que les parois de la rainure 30 (resp. 80) servent de surface de référence auxdites extrêmités 10 et20 de fibres optiques et tel que le guide 3 (resp. 8) soit entouré par au moins un conduit tubulaire (4, 6) (resp. 9) presseur souple.

Selon une autre caractéristique, la rainure 30 (resp. 80) du guide (resp. 8) s'évase en s'éloignant du point central de jonction des extrêmités de fibres (1, 2) afin que chaque extrêmité de fibre (1, 2) soit introduite partiellement dénudée à chaque extrêmité de cette rainure 30 (resp. 80).

En outre, les conduits presseurs (4, 6) (resp. 9) sont réalisés dans un matériau plastique transparent.

Selon une autre caractéristique, les conduits presseurs (4, 6) (resp. 9) sont non jointifs et disposés de part et d'autre du point de jonction des extrêmités (10, 20) de fibres (1, 2) et par le fait qu'entre ces conduits (4, 6) (resp. 9) est insérée de la colle 7 dans la rainure 30 (resp. 80) sur les extrêmités de fibres (10, 20).

Selon une autre caractéristique, le guide 3 (resp. 8) est réalisé dans un matériau tel que acier, matière plastique rigide, céramique, verre, ou autre.

De plus, chaque extrêmité 31 du guide (3, 8) est filetée afin de recevoir un écrou 5 de maintien de fibre (1, 2). Cet écrou 5 s'engage, d'une part, dans le filet 31 du guide (3, 8) et, d'autre part, sur la gaine (12, 22) de protection de la fibre (1, 2).

Selon une variante préférée de l'invention, le guide 8 présente en coupe une section polygonale à n côtés, chaque sommet étant pourvu d'une rainure 80 coaxiale audit guide 8, ledit guide 8 recevant alors 2n extrêmités de fibres (1, 2) deux à deux dans chaque rainure 80, n'étant un nombre entier choisi en fonction de l'application.

D'autres avantages et caractéristiques apparaîtront à la lecture de la description suivante illustrée par des dessins.

La figure 1 représente deux fibres optiques, selon l'invention, à rabouter.

La figure 2 représente les différents éléments du dispositif de l'invention.

La figure 3 représente une fibre optique de la figure 1 en position dans le dispositif de la figure 2.

La figure 3a représente une vue en coupe selon AA' des figures 2 et 3.

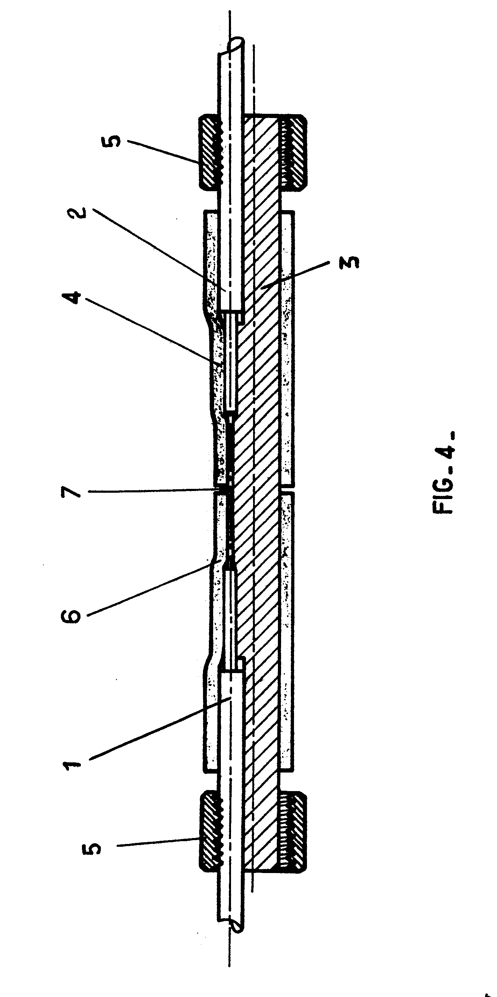

La figure 4 représente deux fibres optiques accouplées dans un dispositif selon la figure 2.

La figure 5 représente une vue en coupe d'un dispositif de raccordement selon l'invention pour n paires de fibres optiques accouplées deux à deux.

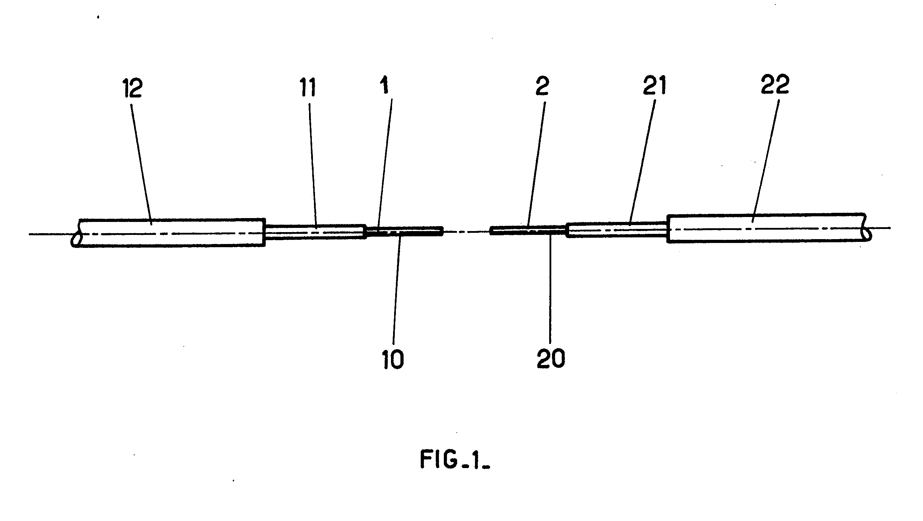

En se référant à la figure 1, deux extrêmités (10, 20) de fibres optiques (1, 2) sont représentées, dénudées totalement sur au moins une certaine longueur. Un peu en retrait de ces extrêmités (10, 20), les fibres (1, 2) sont encore enrobées de leur gaine (11, 21) dite coating. En s'éloignant encore des extrêmités (10, 20), elles sont entourées de leur gaine de protection (12, 22).

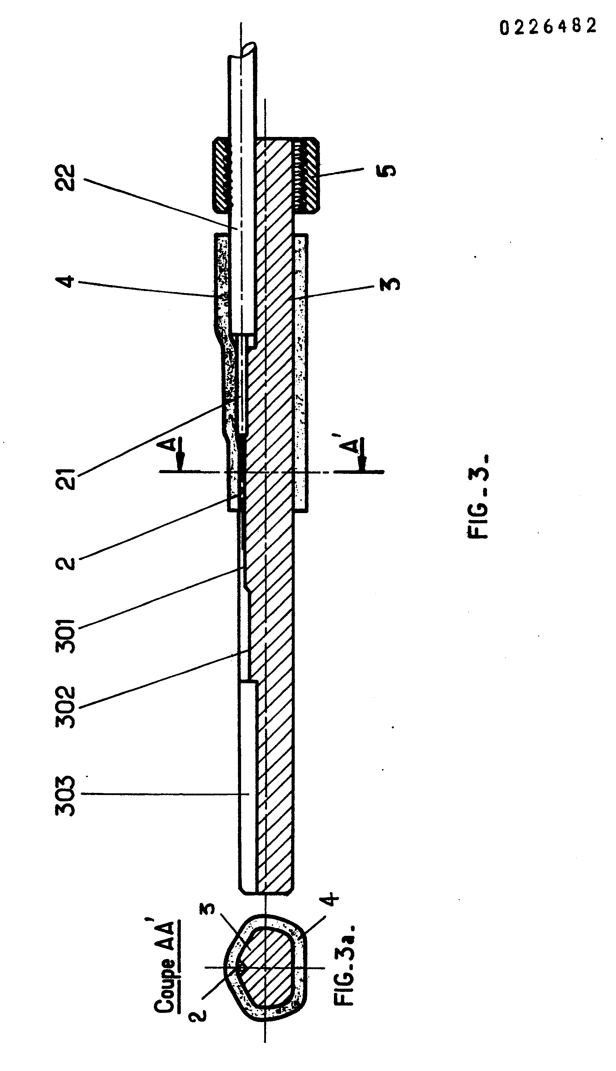

Pour les raccorder, le dispositif de l'invention est essentiellement formé d'un guide 3 monobloc longitudinal ayant sensiblement une structure tubulaire, pourvu d'au moins une rainure 30 sur sa périphérie, ladite rainure 30 étant placée coaxialement audit guide 3. Cette rainure 30 se présente comme un Vé. En outre, les côtés du guide 3 de part et d'autre de cette rainure 30 forment avantageusement un angle inférieur à 180°. La rainure 30 est relativement peu profonde en 301 au voisinage du milieu du guide 3 qui sera le point de jonction des fibres, puis devient un peu plus large et plus profonde en 302 de part et d'autre de cette partie 301, et enfin sensiblement plus profonde et plus large en 303 au voisinage des extrêmités du guide 3. On choisit avantageusement une profondeur de rainure 30, en 301 tout particulièrement, telle que la fibre 1 ou 2 dépasse du sommet du guide 3 de part et d'autre de cette rainure 30 comme illustré sur la vue en coupe du guide 3 de la figure 3a.

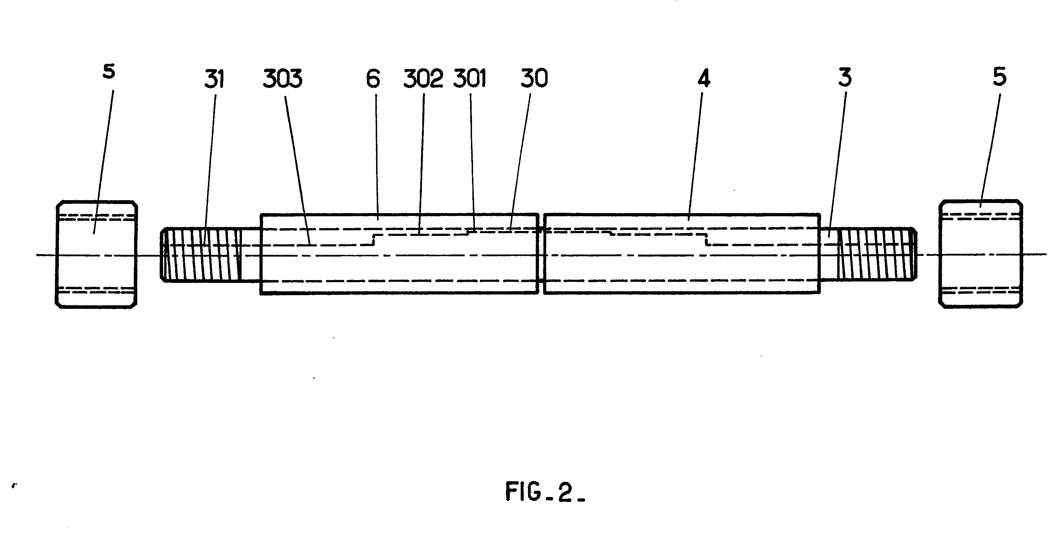

La figure 2 représente le guide 3 en vue de côté entouré d'au moins un conduit 4 tubulaire presseur ou encore de deux conduits identiques 4 et 6. Ces conduits 4 et 6 sont choisis avantageusement en plastique transparent et susceptibles de s'enfiler autour du guide 3. La longueur de ces conduits 4 et 6 est telle qu'ils laissent libres les extrêmités du guide 3. En effet, les deux extrêmités 31 du guide 3 sont filetées sur au moins une certaine proportion de ce guide 3 pourvue de la partie 303 évasée de rainure 30.

Le guide 3 est avantageusement réalisé dans un matériau métallique ou dans un matériau plastique rigide ou en céramique, ou dans tout autre matériau rigide aisément usinable ou moulable. De la sorte, les parois de la rainure 30 servent de surface de référence auxdites extrêmités (10, 20) de fibres optiques ainsi qu'il sera explicité ultérieurement.

Sur cette figure 2, la rainure 30 est représentée en pointillés.

Deux écrous 5 de maintien de la gaine protectrice 12 et 22 des fibres 1 et 2 peuvent ainsi être engagés sur les filetages de ce guide 3 ainsi qu'il apparaîtra ultérieurement.

En effet, la figure 3 illustre le montage d'une extrêmité de fibre 2 de la figure 1 dans le dispositif de la figure 2 selon l'invention. La fibre 2 est alors enfilée d'abord dans l'écrou puis sous le conduit presseur 4 dans la rainure 30 du guide 3. Ce conduit presseur 4 est avantageusement choisi, d'une part, transparent, pour faciliter le guidage des fibres 1 et 2 sous binoculaire dans la rainure 30 du guide 3 et, d'autre part, en plastique souple, afin que le conduit 4 s'applique bien sur la fibre 2 ainsi que sur les côtés du sommet du guide 3 au voisinage de la rainure 30. Ainsi, la partie 20 complètement dénudée de la fibre vient se loger dans la partie 301 peu profonde de la rainure 30 tandis que la partie de fibre 2 encore pourvue de la gaine 21 vient se loger dans la partie 302 de la rainure 30 et que, enfin, la partie de fibre 2 pourvue de la gaine de protection 22 vient se placer dans la partie 303 la plus évasée de la rainure 30.

Lorsque la fibre 2 est en place, l'écrou 5 est engagé dans le filet du guide 3 et vient mordre alors la gaine 22 de protection au voisinage des bords de la rainure 30. La gaine de protection 22 est ainsi maintenue en place au moyen de cet écrou 5.

L'opération similaire est alors effectuée pour l'autre extrêmité de fibre 1 qui est alors engagée sous l'autre conduit presseur 6. On peut ainsi, soit placer un seul conduit presseur pour les deux extrêmités de fibres 1 et 2, soit avantageusement deux conduits presseurs 4 et 6 de façon non jointive. Dans ce dernier cas, on pose un peu de colle 7 dans la partie 301 de la rainure 30 entre les deux extrêmités de fibres 1 et 2 afin de maintenir les fibres 1 et 2 en place. Préalablement à l'adjonction de colle 7, il est avantageux de pouvoir dépoussiérer la rainure à proximité des deux extrêmités (10, 20) de fibres (1, 2). De toute façon, la pression exercée par le conduit presseur 4 sur les fibres 1 et 2 et sur le sommet de la rainure 30 suffit à maintenir les deux fibres 1 et 2 dans la rainure 30 du guide 3.

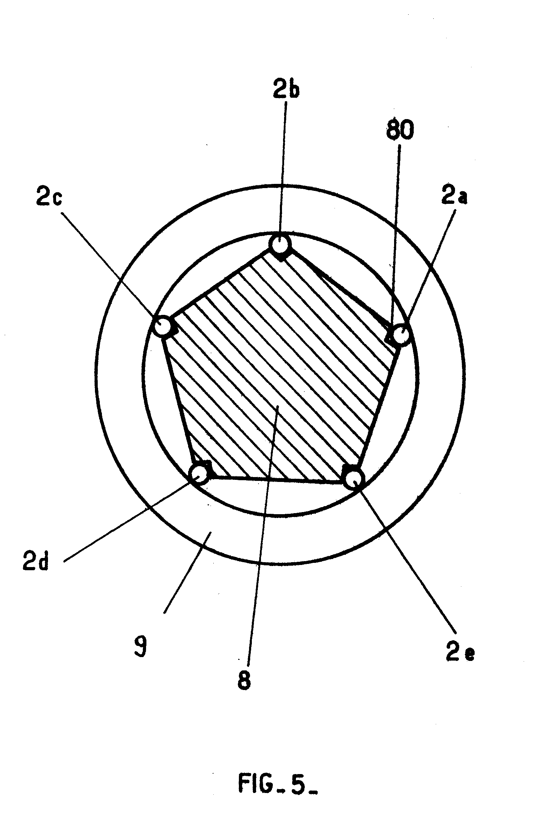

La figure 5 représente en coupe une variante du dispositif de raccordement de l'invention pour laquelle il est possible de raccorder deux à deux 2n extrêmités de fibres optiques. Le guide 8 de l'invention se présente alors sensiblement comme un polygone, par exemple à 5 faces sur cette figure 5, mais plus généralement à n faces, les n sommets de ce polygone 8 étant pourvus de rainures 80 coaxiales à ce guide 8 laissant émerger les 2n extrêmités de fibres 2a, 2b, ... de telle sorte que le conduit presseur 9 applique ces fibres 2a, 2b, ... 2n dans chaque rainure 80. Le nombre entier n est choisi de façon appropriée en fonction de l'application. Dans cette variante, le guide 8 est encore réalisé dans un matériau rigide afin que les parois de chacune de ses rainures 80 servent de surface de référence aux extrêmités de fibres (1a, 1b, ..., 2a, 2b, ...) à abouter deux à deux. Les deux conduits presseurs placés autour du guide 8 au voisina ge des points de jonction des 2n fibres optiques sont également choisis dans un matériau souple appliquant ces fibres au fond de chaque rainure 80.

### Revendications

1. Dispositif de raccordement d'extrêmités de fibres optiques deux à deux, comprenant une embase 3 (resp. 8) comportant une rainure 30 (resp. 80) de réception des extrêmités de fibres (1, 2) pour aligner et abouter les extrêmités 10 et 20 de ces fibres (1, 2), un moyen presseur 4 (resp. 9) au moins permettant de maintenir lesdites extrêmités 10 et 20 dans ladite rainure 30 (resp. 80), ladite embase 3 étant un guide 3 (resp. 8) de structure sensiblement tubulaire, ladite rainure 30 étant disposée sur la périphérie de ce guide 3 et coaxialement à ce guide 3 (resp. 8), dispositif caractérisé par le fait que le guide 3 (resp. 8) est un support rigide de telle sorte que les parois de la rainure 30 (resp. 80) servent de surface de référence auxdites extrêmités (10, 20) de fibres optiques et par le fait que le guide 3 (resp. 8) est entouré par au moins un conduit tubulaire (4, 6) (resp. 9) presseur souple.

2. Dispositif de raccordement selon la revendication 1 caractérisé par le fait que la rainure 30 (resp. 80) dudit guide 3 (resp. 8) s'évase en s'éloignant du point central de jonction des extrêmités de fibres (1, 2) afin que chaque extrêmité de fibre (1, 2) soit introduite partiellement dénudée à chaque extrêmité de cette rainure 30 (resp. 80).

3. Dispositif selon l'une des revendications 1 à 2 caractérisé par le fait que les conduits presseurs (4, 6) (resp. 9) sont réalisés dans un matériau plastique transparent.

4. Dispositif selon l'une des revendications 1 à 3 caractérisé par le fait que les conduits presseurs (4, 6) (resp. 9) sont non jointifs et disposés de part et d'autre du point de jonction des extrêmités (10, 20) de fibres (1, 2) et par le fait que, entre ces conduits (4, 6) (resp. 9) est insérée de la colle 7 dans la rainure 30 (resp. 80) sur les extrêmités de fibres (10, 20).

3. Dispositif selon l'une des revendications 1 à 4 caracté risé par le fait que guide 3 (resp. 8) est réalisé dans un matériau tel que acier, plastique rigide, céramique, verre ou autre.

6. Dispositif selon l'une des revendications 1 à 5 caractérisé par le fait que chaque extrêmité 31 du guide (3, 8) est filetée afin de recevoir un écrou 5 de maintien de fibre (1, 2).

7. Dispositif selon la revendication 6 caractérisé par le fait que ledit écrou 5 s'engage, d'une part, dans le filet 31 du guide (3, 8) et, d'autre part, sur la gaine (12, 22) de protection de la fibre (1, 2).

8. Dispositif selon l'une des revendications 1 à 7 caractérisé par le fait que la section droite dudit guide 8 est un polygone à n côtés, n étant un entier naturel, dont chaque sommet est pourvu d'une rainure 80, chaque rainure 80 étant placée parallèlement à l'axe dudit guide 8.

12    11    1          2    21    22

10          20

FIG.1.

0226482

0226482

FIG_2_

Coupe AA'

303  302  301  2  21  4  22

FIG.3a.

FIG_3_

3  5

0226482

FIG_4_

0226482

FIG_5_

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl⁴) |
|---|---|---|---|
| X | EP-A-0 122 169 (ALLIANCE TECHNIQUE INDUSTRIELLE) * Revendications 1,2,24-26,29,32; figures 16,17 * | 1,8 | G 02 B 6/38 |
| A | | 2 | |
| | --- | | |
| A | US-A-4 030 809 (M. ONISHI) * Colonne 3, lignes 7-45 * | 5 | |
| | --- | | |
| A | FR-A-2 360 896 (LIGNES TELEGRAPHIQUES ET TELEPHONIQUES) * Revendications * | 1 | |
| | --- | | |
| A | US-A-4 110 000 (J.H. BOGAR) * Résumé * | 1 | **DOMAINES TECHNIQUES RECHERCHES** (Int. Cl.4) |
| | --- | | |
| A | EP-A-0 116 481 (SILEC) * Résumé * | 1 | G 02 B |
| | ----- | | |

Le présent rapport de recherche a été établi pour toutes les revendications

| Lieu de la recherche | Date d'achèvement de la recherche | Examinateur |
|---|---|---|
| LA HAYE | 09-02-1987 | PFAHLER R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82